# EUROPEAN PATENT APPLICATION

(11) **EP 4 791 110 A1**
(43) Date of publication of application: **12.08.2026**
(21) Application number: 26154254.2
(22) Date of filing: 27.01.2026
(51) Int. Cl.: H04W 76/14, H04W 8/00, H04W 48/12, H04W 84/12

(54) **METHOD, APPARATUS, DEVICE AND STORAGE MEDIA FOR WIRELESS CONNECTION**

(30) Priority: 10.02.2025 CN 202510147996
(71) Applicant: Nokia Solutions and Networks Oy, 02610 Espoo (FI)
(72) Inventor: CHENG, Gang, Shanghai (CN); JIANG, Yi Ming, Shanghai (CN); QIAN, Zhi Hong, Shanghai (CN); HUANG, Kai Kai, Shanghai (CN); MUTGAN, Orhan Okan, Munich (DE); LUO, Ye, Shanghai (CN)
(74) Representative: Nokia EPO representatives

(57) **Abstract**

Embodiments of the present disclosure provide apparatuses, devices, methods and storage media for wireless connection. A first apparatus receives a device discovery request from a first terminal device associated with the first apparatus, wherein the device discovery request comprises a first address associated with the first terminal device. The first apparatus broadcasts the device discovery request. The first apparatus receives a discovery response from a second apparatus for the device discovery request, the discovery response comprising the first address and a second address associated with the second terminal device. The first apparatus forwards the discovery response to the first terminal device based on the first address.

## Description

### TECHNICAL FIELD

Embodiments of the present disclosure relate generally to communication technology, and more particularly to a method, apparatuses, a device and computer-readable storage media for wireless connection.

### BACKGROUND

Tunneled Direct Link Setup (TDLS) technology is one of Wi-Fi point-to-point (P2P) technologies. TDLS features encapsulation of setup frames within data frames, enabling transparent transmission through access points. Multiple apparatuses may establish TDLS connections via an access point

### SUMMARY

In a first aspect of the present disclosure, an apparatus for wireless connection is provided. The first apparatus comprises at least one processor and at least one memory storing instructions that, when executed by the at least one processor, cause the first apparatus at least to: receive a device discovery request from a first terminal device associated with the first apparatus, wherein the device discovery request comprises a first address associated with the first terminal device; broadcast the device discovery request; receive, from a second apparatus, a discovery response from a second terminal device associated with the second apparatus for the device discovery request, wherein the discovery response comprises the first address and a second address associated with the second terminal device; and forward the discovery response to the first terminal device based on the first address.

In a second aspect of the present disclosure, another apparatus for wireless connection is provided. The second apparatus comprises at least one processor and at least one memory storing instructions that, when executed by the at least one processor, cause the second apparatus at least to: receive a device discovery request from a first apparatus, wherein the device discovery request comprises a first address associated with a first terminal device; broadcast the device discovery request; receive, from a second terminal device associated with the second apparatus, a discovery response for the device discovery request, wherein the discovery response comprises the first address and a second address associated with the second terminal device; and forward the discovery response to the first terminal device via the first apparatus based on the first address.

In a third aspect of the present disclosure, a terminal device is provided. The terminal device comprises at least one processor and at least one memory storing instructions that, when executed by the at least one processor, cause the terminal device at least to: receive a device discovery request from a second apparatus for a first terminal device associated with a first apparatus, wherein the device discovery request comprises a first address associated with the first terminal device; determine whether the first terminal device and the terminal device are associated with the same routing device based on the first address; and send a discovery response to the second apparatus for the device discovery request of the first terminal device in response to determining that the first terminal device and the terminal device are not associated with the same routing device.

In a fourth aspect of the present disclosure, a method for wireless connection is provided. The method comprises: receiving, at a first apparatus, a device discovery request from a first terminal device associated with the first apparatus, wherein the device discovery request comprises a first address associated with the first terminal device; broadcasting the device discovery request; receiving, from a second apparatus, a discovery response from a second terminal device associated with the second apparatus for the device discovery request, wherein the discovery response comprises the first address and a second address associated with the second terminal device; and forwarding the discovery response to the first terminal device based on the first address.

In a fifth aspect of the present disclosure, a method for wireless connection is provided. The method comprises: receiving, at a second apparatus, a device discovery request from a first apparatus, wherein the device discovery request comprises a first address associated with a first terminal device; broadcasting the device discovery request; receiving, from a second terminal device associated with the second apparatus, a discovery response for the device discovery request, wherein the discovery response comprises the first address and a second address associated with the second terminal device; and forwarding the discovery response to the first terminal device via the first apparatus based on the first address.

In a sixth aspect of the present disclosure, a method for wireless connection is provided. The method comprises: receiving, at a terminal device, a device discovery request from a second apparatus for a first terminal device associated with a first apparatus, wherein the device discovery request comprises a first address associated with the first terminal device; determining whether the first terminal device and the terminal device are associated with the same routing device based on the first address; and sending a discovery response to the second apparatus for the device discovery request of the first terminal device in response to determining that the first terminal device and the terminal device are not associated with the same routing device.

In a seventh aspect of the present disclosure, a communication apparatus is provided. The apparatus comprises: means for receiving a device discovery request from a first terminal device associated with a first apparatus, wherein the device discovery request comprises a first address associated with the first terminal device; means for broadcasting the device discovery request; means for receiving, from a second apparatus, a discovery response from a second terminal device associated with the second apparatus for the device discovery request, wherein the discovery response comprises the first address and a second address associated with the second terminal device; and a processor configured to forward the discovery response to the first terminal device based on the first address..

In an eighth aspect of the present disclosure, a communication apparatus is provided. The apparatus comprises: means for receiving a device discovery request from a first apparatus, wherein the device discovery request comprises a first address associated with a first terminal device; means for broadcasting the device discovery request; means for receiving, from a second terminal device associated with a second apparatus, a discovery response for the device discovery request, wherein the discovery response comprises the first address and a second address associated with the second terminal device; and A processor configured to forward the discovery response to the first terminal device via the first apparatus based on the first address.

In a ninth aspect of the present disclosure, a communication apparatus is provided. The apparatus comprises: means for receiving a device discovery request from a second apparatus for a first terminal device associated with a first apparatus, wherein the device discovery request comprises a first address associated with the first terminal device;means for determining whether the first terminal device and the communication apparatus are associated with the same routing device based on the first address; and means for sending a discovery response to the second apparatus for the device discovery request of the first terminal device in response to determining that the first terminal device and the communication apparatus are not associated with the same routing device.

In a tenth aspect of the present disclosure, a computer-readable storage medium is provided. The computer-readable storage medium stores a computer program that, when executed by a processor, implements the methods according to the fourth, fifth, or sixth aspects.

It should be understood that the content described in this summary section is not intended to define key features or characteristics of embodiments of the present disclosure, nor to limit the scope of the present disclosure. Other features will become apparent from the following description.

### BRIEF DESCRIPTION OF THE DRAWINGS

The embodiments of the present disclosure are illustrated by way of example and not limitation in the accompanying drawings, wherein:
FIG. 1 illustrates an exemplary communication environment in which embodiments of the present disclosure may be implemented;
FIG. 2 illustrates a signaling diagram for wireless connection according to some embodiments of the present disclosure;
FIG. 3 illustrates another signaling diagram for wireless connection according to some embodiments of the present disclosure;
FIG. 4 illustrates an example TDLS discovery request frame format;
FIG. 5 illustrates a flowchart of a method implemented at the first apparatus according to some embodiments of the present disclosure;
FIG. 6 illustrates a flowchart of a method implemented at the second apparatus according to some embodiments of the present disclosure;
FIG. 7 illustrates a flowchart of a method implemented at the second terminal device according to some embodiments of the present disclosure;
FIG. 8 illustrates a simplified block diagram of an apparatus suitable for implementing embodiments of the present disclosure; and
FIG. 9 illustrates an example computer-readable medium according to some embodiments of the present disclosure.

In all figures, identical or similar reference numerals denote identical or similar elements.

### DETAILED DESCRIPTION

The following description refers to several exemplary embodiments illustrated in the drawings to explain principles of the present disclosure. It should be understood that these specific embodiments are described only for enabling those skilled in the art to better understand and implement the present disclosure, and not to limit the scope of the present disclosure in any way.

As used herein, the term "comprising" and similar terms shall be understood as open-ended inclusion, i.e., "including but not limited to". The term "based on" shall be understood as "at least partially based on". The term "an embodiment" or "the embodiment" shall be understood as "at least one embodiment". Terms such as "first", "second", etc. may refer to different or identical objects. Other explicit and implicit definitions may be comprised below.

As used herein, the term "determining" encompasses various actions. For example, "determining" may comprise operations, calculations, processing, derivation, investigation, lookup (e.g., in a table, database, or other data structure), identification, etc. Additionally, "determining" may comprise receiving (e.g., receiving information), accessing (e.g., accessing data in memory), etc. Furthermore, "determining" may comprise parsing, selection, choice, establishment, etc.

Unless explicitly stated otherwise herein, "responding to A" performing a step does not imply immediate execution after "A", but may comprise one or more intermediate steps.

As used herein, the term "communication network" refers to any suitable communication standard-compliant network, such as 5G signaling networks, New Radio (NR), Long Term Evolution (LTE), LTE-Advanced (LTE-A), Wideband Code Division Multiple Access (WCDMA), High Speed Packet Access (HSPA), Narrow Band Internet of Things (NB-loT), etc. Additionally, communication between terminal devices and network equipment in a communication network may be performed according to any suitable generation communication protocol, including but not limited to first generation (1G), second generation (2G), 2.5G, 2.75G, third generation (3G), fourth generation (4G), 4.5G, fifth generation (5G), sixth generation (6G) communication protocols and/or any other currently known or future-developed protocols. Embodiments of the present disclosure may be applied to various communication systems including but not limited to terrestrial communication systems, non-terrestrial communication systems, or combinations thereof. Given rapid development in communication fields, future types of communication technologies and systems may also be used to implement the present disclosure. This shall not be construed as limiting the scope of the present disclosure to only the aforementioned systems.

As used herein, the term "network equipment" refers to nodes in a communication network through which terminal devices access the network and receive services. Depending on terminology and technology applied, network equipment may refer to 5G core networks, signaling network devices, base stations (BS) or access points (AP), such as NodeB (NodeB or NB), evolved NodeB (eNodeB or eNB), NR NB (also known as gNB), remote radio units (RRU), radio heads (RH), remote radio heads (RRH), relays, integrated access and backhaul (IAB) nodes, low-power nodes such as femto, pico, etc. In some exemplary embodiments, a wireless access network (RAN) separation architecture comprises a central unit (CU) and distributed units (DU). IAB nodes comprise mobile terminal (IAB-MT) portions and DU portions, where the IAB-MT portion acts like a user equipment (UE) for parent nodes, and the DU portion acts like a base station for next-hop IAB nodes. In some exemplary embodiments, network equipment comprises optical network units (ONUs). ONUs may comprise visible light communication (VLC) components.

As used herein, the term "terminal device" refers to any terminal device capable of wireless communication. By way of example and not limitation, terminal devices may also be referred to as communication devices, user equipment (UE), subscriber stations (SS), portable subscriber stations, mobile stations (MS), or access terminals (AT). Terminal devices comprise but are not limited to mobile phones, cellular phones, smartphones, VoIP phones, wireless local loop phones, tablet computers, wearable terminal devices, personal digital assistants (PDAs), portable computers, desktop computers, image capture terminal devices such as digital cameras, gaming terminal devices, music storage and playback devices, vehicle-mounted wireless terminal devices, wireless endpoints, mobile stations, laptop embedded devices (LEE), laptop installed devices (LME), USB encryption dongles, smart devices, wireless customer premises equipment (CPE), Internet of Things (IoT) devices, watches or other wearable devices, head-mounted displays (HMDs), vehicles, drones, medical devices and applications (e.g., remote surgery), industrial devices and applications (e.g., robots and/or other wireless devices operating in industrial/automation processing chains), consumer electronic devices, devices running on commercial/industrial wireless networks, etc. Terminal devices may correspond to the mobile terminal (MT) portion of IAB nodes (e.g., relay nodes). In the following description, terms "terminal device", "communication device", "terminal", "user equipment", and "UE" may be used interchangeably.

The term "circuitry" as used herein refers to one or more of: (a) hardware circuit implementations only (such as analog and/or digital circuits); and (b) combinations of hardware circuits and software, such as (if applicable): (i) analog and/or digital hardware circuits with software/firmware; and (ii) any portion of a hardware processor with software (including digital signal processors, software, and memory working together to enable devices such as optical communication devices or other computing devices to perform various functions); and (c) hardware circuits and/or processors, such as microprocessors or portions thereof, requiring software (e.g., firmware) for operation but capable of operating without software when not required.

The definition of "circuitry" applies to all uses of this term in the present application (including any claims). As another example, the term "circuitry" used herein also covers implementations consisting solely of hardware circuits or processors (or multiple processors), or portions thereof, with accompanying software or firmware. For instance, if applicable to a specific claim element, the term "circuitry" also covers baseband integrated circuits, processor integrated circuits, or similar integrated circuits in computing devices.

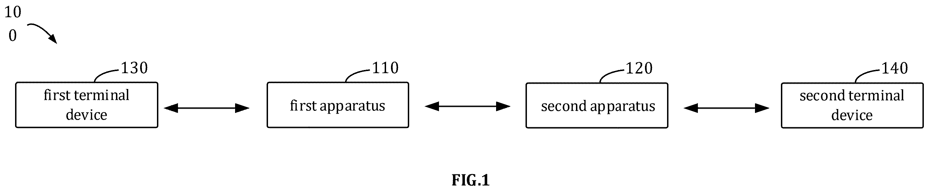

FIG. 1 illustrates an exemplary communication environment 100 in which embodiments of the present disclosure may be implemented. In communication environment 100, multiple terminal devices (e.g., first terminal device 130 and second terminal device 140) and multiple apparatuses (e.g., first apparatus 110 and second apparatus 120) are comprised. First terminal device 130 may connect to a wireless network via first apparatus 110. Second terminal device 140 may connect to a wireless network via second apparatus 120. In the example of FIG. 1, first apparatus 110 and second apparatus 120 may be devices providing wireless network access, such as network equipment, wireless access points (AP), routing devices, base stations, etc. Examples of terminal devices comprise but are not limited to user equipment (UE), smartphones, tablets, computers, smart TVs, smart home devices, loT devices, wearable devices, etc.

In some embodiments, first apparatus 110 comprises a first routing device and second apparatus 120 comprises a second routing device. Communication between the first routing device and second routing device may be via wired connection and/or wireless connection. Wireless connections between first terminal device 130 and second terminal device 140 may be established via first apparatus 110 and second apparatus 120.

It should be understood that the number of apparatuses, devices, and connections shown in FIG. 1 is merely illustrative and not limiting. Communication environment 100 may comprise any suitable number of apparatuses and devices configured to implement embodiments of the present disclosure. Although not shown, it should be understood that one or more other apparatuses or devices may be deployed in communication environment 100.

Communication in communication environment 100 may be implemented according to any appropriate communication protocol(s). Examples of communication protocols comprise but are not limited to first generation (1G), second generation (2G), 2.5G, 2.75G, third generation (3G), fourth generation (4G), 4.5G, fifth generation (5G), sixth generation (6G) cellular communication protocols, IEEE 802.11 (e.g., 802.11bn) wireless local area network communication protocols, and/or any other currently known or future-developed protocols.

In some mechanisms, in a network environment where terminal devices are connected via routing devices, each terminal device is associated with a corresponding access point. Terminal devices directly connect to the access point via IEEE 802.11 wireless LAN standards or similar methods. When two terminal devices establish wireless connections, they require an access point as an intermediary for information exchange to facilitate connection establishment. In such mechanisms, access points do not forward wireless connection-related information (e.g., TDLS) between each other; thus, terminal devices not associated with the same access point cannot communicate directly.

Specifically, TDLS technology is defined by IEEE 802.11 standards and is one of Wi-Fi P2P technologies. According to IEEE 802.11-2020, TDLS features encapsulating setup frames in data frames for transparent transmission through access points. Therefore, access points do not require direct connection capabilities or support for direct connections between two terminal devices. However, in some mechanisms, TDLS communication requires both terminal devices to be associated with the same basic service set (BSS), meaning cross-BSS TDLS communication is not permitted.

On one hand, when two terminal devices (e.g., a mobile phone and smart TV) are associated with the same BSS, the process for establishing a TDLS connection is as follows. In this example, the mobile phone acts as the TDLS initiating device (TDLS initiator), while the smart TV acts as the TDLS responding device.

In this process, first, the mobile phone sends a TDLS discovery request. The access point receives the TDLS discovery request and forwards it to the smart TV. Then, the smart TV bypasses the access point and directly sends a TDLS discovery response to the mobile phone. At this stage, the smart TV appears in the available screen list of the mobile phone. The user receives notification that search is complete and may select to project the screen onto the smart TV.

Next, the mobile phone sends a TDLS connection request. The access point receives the TDLS connection request and forwards it to the smart TV. Similarly, the smart TV sends a corresponding TDLS connection response, which the access point receives and forwards to the mobile phone. Finally, the mobile phone sends a TDLS acknowledgment message. The access point receives the TDLS acknowledgment and forwards it to the smart TV. In these steps, TDLS connection request, TDLS connection response, and TDLS acknowledgment are processed as data frames and forwarded by the access point.

After exchanging necessary management frames, the two devices establish a TDLS connection and begin transmitting data directly through this connection. The mobile phone and smart TV may negotiate an encryption key to ensure secure communication. In home and enterprise environments, TDLS technology significantly improves communication efficiency between different devices (e.g., streaming video/audio, data migration, backups).

On the other hand, when two terminal devices (e.g., a mobile phone and smart TV) are associated with different BSSs, cross-BSS TDLS connections have not been defined in current standards. That is, existing standards do not allow one access point to forward TDLS management frames (e.g., TDLS discovery request) to another access point; thus, the mobile phone and smart TV cannot establish a TDLS connection.

However, multi-access-point environments are becoming typical scenarios in homes, offices, or public areas. Based on this evolution, effective coordination between multiple access points is desired.

With deployment of access points supporting 802.11bn protocols, certain scenarios in multi-access-point environments may require direct connections between terminal devices under different access points (i.e., different BSSs). For example, a laptop associated with access point 1 in the living room and a smart TV associated with access point 2 in another bedroom may need to establish a TDLS connection directly without relying on an access point for efficient low-latency service.

To solve technical problems such as terminal connections in multi-access-point environments and other potential issues, embodiments of the present disclosure propose a wireless connection solution. According to this solution, first apparatus 110 receives a device discovery request from first terminal device 130 associated with first apparatus 110. The device discovery request comprises a first address associated with first terminal device 130. First apparatus 110 broadcasts the device discovery request. Second apparatus 120 receives the device discovery request from first apparatus 110 and broadcasts it. Second terminal device 140 receives the broadcasted device discovery request from second apparatus 120. Based on the first address, second terminal device 140 determines whether first terminal device 130 and second terminal device 140 are associated with the same routing device (i.e., access point). If they are not associated with the same routing device, second terminal device 140 sends a discovery response to second apparatus 120 for the device discovery request of first terminal device 130. The discovery response comprises the first address and a second address associated with second terminal device 140. Second apparatus 120 receives the discovery response from second terminal device 140 and forwards it to first apparatus 110 based on the first address. First apparatus 110 receives the discovery response from second apparatus 120 and forwards it to first terminal device 130 based on the first address.

According to embodiments of the present disclosure, through interaction between two access points (first apparatus 110 and second apparatus 120), first terminal device 130 associated with first apparatus 110 and second terminal device 140 associated with second apparatus 120 can establish direct wireless connections. In multi-access-point environments, terminal devices associated with different access points can achieve cross-access-point communication.

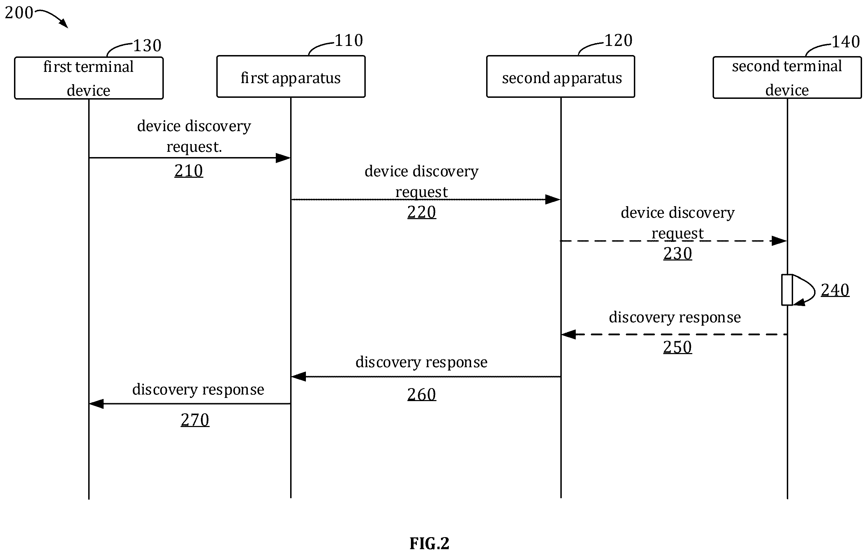

FIG. 2 illustrates a signaling diagram 200 for wireless connection according to some embodiments of the present disclosure. Signaling diagram 200 involves first apparatus 110, second apparatus 120, first terminal device 130, and second terminal device 140 in FIG. 1.

As shown in FIG. 2, in some embodiments, first terminal device 130 associated with first apparatus 110 needs to establish a direct wireless connection (e.g., point-to-point wireless connection) with a target terminal device. First terminal device 130 broadcasts (210) a device discovery request (e.g., TDLS discovery request), which may be in the form of a TDLS management frame. The target terminal device may be associated with second apparatus 120 different from first apparatus 110. In this scenario, first terminal device 130 broadcasts the device discovery request to discover the target terminal device, enabling first apparatus 110 (associated with first terminal device 130) to receive it. The device discovery request comprises a first address associated with first terminal device 130.

In some embodiments, the first address comprises the source address of first terminal device 130, broadcast address, and first basic service set identifier (BSSID) of first apparatus 110. The source address may be the MAC address of first terminal device 130, and the broadcast address may be the destination address. First terminal device 130 is associated with a BSS identified by first BSSID. In other words, first terminal device 130 is associated with the first BSS provided by first apparatus 110 (identified by first BSSID).

Through this first address, devices receiving the device discovery request (e.g., second apparatus 120) can obtain and store the address of the terminal device sending the request (i.e., MAC address of first terminal device 130) and information about its associated access point (i.e., BSSID). Additionally, second apparatus 120 may store the association between first terminal device 130 and first BSSID based on received device discovery request. Thus, when second apparatus 120 needs to send requests, responses, or information related to first terminal device 130 in subsequent operations, it can directly transmit to first terminal device 130 or via first apparatus 110.

If the target terminal device for the device discovery request is also associated with first apparatus 110, first apparatus 110 may forward the device discovery request to that target terminal device. If the target terminal device is not associated with first apparatus 110, after receiving the device discovery request from first terminal device 130, first apparatus 110 broadcasts (220) the device discovery request.

Other access points in communication environment 100 (e.g., second apparatus 120) receive the device discovery request from first apparatus 110 and similarly broadcast (230) it. Second terminal device 140 associated with second apparatus 120 receives the broadcasted device discovery request. If second terminal device 140 is the target for the device discovery request, it may respond to the request.

Second terminal device 140 determines (240) whether first terminal device 130 and second terminal device 140 are associated with the same routing device (i.e., access point). In this embodiment, first terminal device 130 is associated with first apparatus 110 (first routing device), while second terminal device 140 is associated with second apparatus 120 (second routing device). If they are not associated with the same routing device, second terminal device 140 sends a discovery response to second apparatus 120 for the device discovery request of first terminal device 130. The discovery response comprises the first address and a second address associated with second terminal device 140. Similar to the first address, the second address may comprise the MAC address of second terminal device 140 and BSSID of second apparatus 120.

Second apparatus 120 receives (250) the discovery response from second terminal device 140 and forwards it to first apparatus 110. Communication between first apparatus 110 and second apparatus 120 may use wired or wireless transmission; embodiments of the present disclosure do not limit this aspect.

Accordingly, first apparatus 110 receives (260) the discovery response from second terminal device 140 associated with second apparatus 120 for the device discovery request. The discovery response comprises the first address and a second address associated with second terminal device 140. Upon receiving the discovery response, first apparatus 110 may store the MAC address of second terminal device 140, BSSID of second apparatus 120, and association between second terminal device 140 and second BSSID. First apparatus 110 forwards (270) the discovery response to first terminal device 130 based on the first address. In subsequent descriptions, first terminal device 130 is also referred to as initiator or initiating party; target terminal device (second terminal device 140) is also referred to as responder or responding party.

In some embodiments, to support TDLS connections between different BSSs (i.e., different access points like first apparatus 110 and second apparatus 120), new functionality must be added to 802.11bn-supported access points to forward TDLS management frames to another access point. For example, during TDLS connection establishment, when the initiating terminal sends TDLS management frame information (e.g., broadcasted TDLS discovery request, unicast TDLS setup request, or unicast TDLS acknowledgment), the access point associated with the initiating terminal (first apparatus 110) gains new functionality to forward such management frames to a coordinating access point (e.g., second apparatus 120). The next access point (second apparatus 120) then sends management frame information to the responding terminal. When the next access point (second apparatus 120) receives response information from the responding terminal, it may forward that response to the original coordinating access point (first apparatus 110), which finally sends it to the initiating terminal.

This process adds new support for transmitting TDLS discovery response frames to the original initiating terminal via multiple access points. Thus, these coordinating access points record terminal device information with TDLS capability (e.g., MAC addresses and BSSIDs). Consequently, these access points can support subsequent unicast management frames (e.g., TDLS connection request or TDLS acknowledgment) between two TDLS-capable terminal devices.

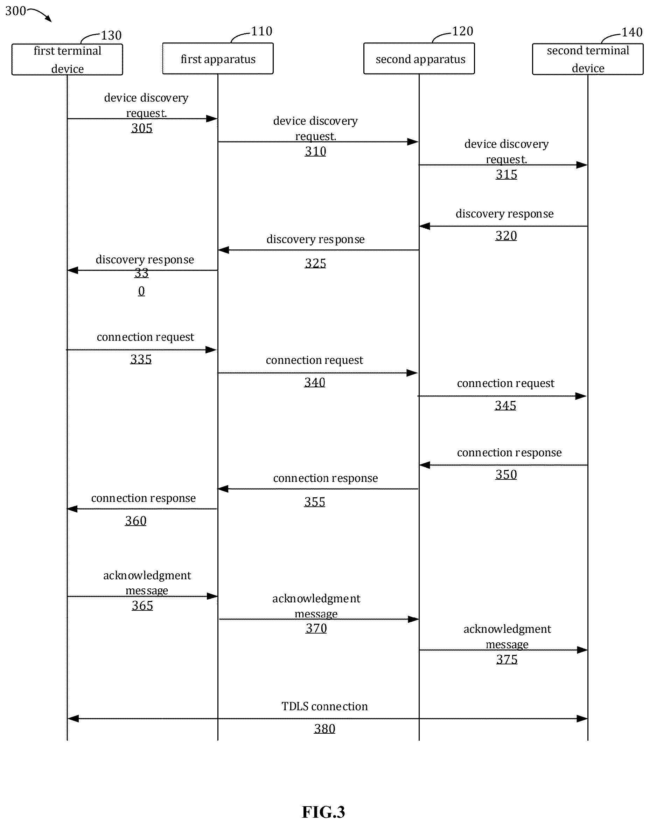

In some embodiments, upon receiving the discovery response, first terminal device 130 sends a connection request to second terminal device 140 via first apparatus 110 and second apparatus 120 (e.g., TDLS connection request). Specifically, first apparatus 110 forwards the wireless connection request (e.g., TDLS request) received from first terminal device 130 to second apparatus 120. Second apparatus 120 forwards the wireless connection request to second terminal device 140 based on the second address comprised in the request. This triggers establishment of direct wireless connections between first terminal device 130 and second terminal device 140 (e.g., TDLS connection). Detailed process for establishing wireless connections will be described with reference to FIG. 3.

In this embodiment, second terminal device 140 can receive requests and information from terminal devices associated with different access points and respond accordingly, enabling direct wireless connections between terminal devices associated with different access points.

FIG. 3 illustrates another signaling diagram 300 for wireless connection according to some embodiments of the present disclosure. Signaling diagram 300 involves first apparatus 110, second apparatus 120, first terminal device 130, and second terminal device 140 in FIG. 1.

As shown in FIG. 3, first terminal device 130 broadcasts (305) a device discovery request (e.g., TDLS discovery request). For example, when a user initiates screen projection via a mobile phone, first terminal device 130 may be the mobile phone. The device discovery request may be a TDLS discovery request for a projection device.

In traditional mechanisms according to IEEE 802.11 standards, when an initiating terminal discovers another terminal within the same BSS, it sends a TDLS discovery request frame to a single address via the access point. In some embodiments for multi-access-point scenarios, since the initiating terminal does not know if the responding terminal has TDLS capability, it may support broadcast addresses in the TDLS discovery request to discover terminals across different BSSs. This enables cross-BSS TDLS connections.

In some embodiments, first apparatus 110 receives a device discovery request from first terminal device 130 associated with first apparatus 110. The device discovery request may comprise a TDLS management frame. First apparatus 110 first checks and identifies the type of TDLS management frame to determine its content (e.g., whether it is a TDLS discovery request). The device discovery request comprises a first address associated with first terminal device 130.

In some embodiments, the first address comprises the source address of first terminal device 130, broadcast address, and BSSID of first apparatus 110. The source address may be the MAC address of first terminal device 130, and the broadcast address may be the destination address. First terminal device 130 is associated with a BSS identified by first BSSID. In other words, first terminal device 130 is associated with the first BSS provided by first apparatus 110 (identified by first BSSID).

Through this first address, devices receiving the device discovery request (e.g., second apparatus 120) can obtain and store the address of the terminal device sending the request (i.e., MAC address of first terminal device 130) and information about its associated access point (i.e., first apparatus 110's BSSID). Additionally, second apparatus 120 may store the association between first terminal device 130 and first BSSID based on received device discovery request. Thus, when second apparatus 120 needs to send requests, responses, or information related to first terminal device 130 in subsequent operations, it can directly transmit to first terminal device 130 or via first apparatus 110.

In some embodiments, first apparatus 110 broadcasts (310) the received device discovery request. For example, if the TDLS management frame is identified as a TDLS discovery request, first apparatus 110 may forward it to terminal devices associated with first apparatus 110. If first apparatus 110 has established coordination framework for data communication with second apparatus 120, it may also forward the TDLS management frame to another BSS's coordinating access point (second apparatus 120). Second apparatus 120 receives the device discovery request from first apparatus 110 and similarly broadcasts (315) it. This enables searching for target terminal devices across different BSSs.

In some embodiments, second apparatus 120 stores the first address and association between first apparatus 110 (or first BSSID) and first terminal device 130 upon receiving the device discovery request from first apparatus 110. Second apparatus 120 may store multiple associations between terminal devices and apparatuses (or BSSIDs). By storing these associations, second apparatus 120 can quickly respond to requests, responses, or information related to terminal devices not associated with it (e.g., first terminal device 130).

Accordingly, second terminal device 140 receives the broadcasted device discovery request from second apparatus 120. If second terminal device 140 is the target for the device discovery request, it may respond. In this example where the device discovery request is for a projection device (TDLS discovery request), second terminal device 140 may be a smart TV. In subsequent descriptions, second terminal device 140 is also referred to as responder or responding party. It should be understood that while only one second terminal device 140 is shown in some embodiments, there may be multiple second terminal devices 140 responding to the device discovery request (i.e., multiple target terminal devices). These target terminal devices may be associated with second apparatus 120 or other apparatuses/routing devices communicating with first apparatus 110; the scope of the present disclosure is not limited in this aspect.

In some embodiments, if two terminal devices' BSSIDs are identical (i.e., first terminal device 130 and second terminal device 140 are associated with the same routing device), second terminal device 140 may send a discovery response directly to the initiating terminal. If their BSSIDs differ (i.e., they are associated with different routing devices), second terminal device 140 sends the discovery response to second apparatus 120. The receiving address of the discovery response is the address of second apparatus 120 (e.g., MAC address), and the target address is the address of first terminal device 130 (e.g., MAC address); thus, the discovery response is sent via second apparatus 120 to first terminal device 130.

Second terminal device 140 sends (320) a discovery response for the device discovery request of first terminal device 130 to second apparatus 120. The discovery response comprises the first address and a second address associated with second terminal device 140. Second apparatus 120 then forwards the discovery response to coordinating first apparatus 110, where the receiving address is first apparatus 110's address and target address is first terminal device 130's address.

In some embodiments, the second address comprises the MAC address of second terminal device 140 and BSSID of second apparatus 120. Second terminal device 140 is associated with a BSS identified by second BSSID. In other words, second terminal device 140 is associated with the second BSS provided by second apparatus 120 (identified by second BSSID).

Through this second address, devices receiving the discovery response (e.g., first apparatus 110) can obtain and store the address of the terminal device sending the response (i.e., MAC address of second terminal device 140) and information about its associated access point (i.e., second BSSID). Additionally, first apparatus 110 may store the association between second terminal device 140 and second BSSID based on received discovery response. Thus, when first apparatus 110 needs to send requests, responses, or information related to second terminal device 140 in subsequent operations, it can directly transmit to second terminal device 140 or via second apparatus 120.

In some embodiments, TDLS-capable second terminal device 140 checks the BSSID in the discovery request. The first address comprises first BSSID; based on comparison between first BSSID and second BSSID associated with second terminal device 140, it determines whether first terminal device 130 and second terminal device 140 are associated with the same routing device (access point). Specifically, TDLS discovery requests comprise category fields, TDLS action fields, dialogue tags, link identifiers, multi-band fields, etc. Example fields for TDLS discovery requests are shown in Table 1. It should be understood that Table 1's fields are merely examples and not limiting; TDLS discovery requests may use other appropriate formats.

**Table 1**

| No | Information | Description |
|---|---|---|
| 1 | Category | The category field is defined in the standard, for example as defined in clause 9.4.1.11 of the 802.11 protocol |
| 2 | TDLS Action | The TDLS action field is defined in the standard, for example as defined in clause 9.6.12.1 of the 802.11 protocol |
| 3 | Dialog Token | The dialog token field may be used to match a TDLS discovery response frame and its corresponding TDLS discovery request frame; the dialog token is defined in the standard, for example as defined in clause 9.4.1.12 of the 802.11 protocol |
| 4 | Link Identifier | The link identifier element is defined in the standard, for example as specified in clause 9.4.2.61 of the 802.11 protocol |
| 5 | Multi-band segment | If dot1multibandimplemented is true, the multi-band element may optionally be presented |

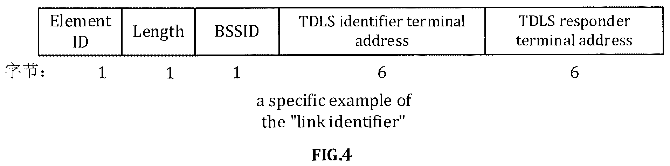

FIG. 4 illustrates a specific example of the "link identifier" in TDLS discovery requests. As shown, the link identifier comprises BSSID (e.g., BSSID associated with the terminal device sending the message, i.e., initiating terminal's BSSID), TDLS identifier terminal address (i.e., initiating terminal's address), and TDLS responder terminal address (i.e., responding terminal's address). The link identifier indicates the BSS of the TDLS wireless connection's initiating STA (first terminal device 130), i.e., first apparatus 110's BSSID associated with first terminal device 130. Similarly, second BSSID associated with second terminal device 140 is second apparatus 120's BSSID. Second terminal device 140 determines that first terminal device 130 and second terminal device 140 are not associated with the same routing device (access point) because their BSSIDs differ.

Second apparatus 120 receives the discovery response from second terminal device 140 and forwards it to first apparatus 110. Communication between first apparatus 110 and second apparatus 120 may use wired or wireless transmission; embodiments of the present disclosure do not limit this aspect.

In some embodiments, second apparatus 120 determines whether first terminal device 130 is associated with second apparatus 120 based on the first address. If first terminal device 130 is associated with second apparatus 120, second apparatus 120 may directly send the discovery response to first terminal device 130. Alternatively, if it determines that first terminal device 130 is associated with first apparatus 110 but not with second apparatus 120, second apparatus 120 forwards (325) the discovery response to first terminal device 130 via first apparatus 110 based on the first address.

First apparatus 110 receives the discovery response from second apparatus 120. First apparatus 110 then forwards (330) the discovery response to first terminal device 130 based on the first address.

In some embodiments, first apparatus 110 stores the second address and association between second apparatus 120 and second terminal device 140 upon receiving the discovery response from second apparatus 120. When subsequent requests, responses, or information related to terminal devices not associated with it (e.g., second terminal device 140) are received, first apparatus 110 can quickly respond based on stored associations.

After receiving the discovery response, first terminal device 130 obtains information about target terminal device second terminal device 140 and sends a connection request to establish TDLS connection with second terminal device 140 via first apparatus 110. The receiving address in the connection request is first apparatus 110's address, and target address is second terminal device 140's address. For example, when smart TV (second terminal device 140) appears in mobile phone (first terminal device 130)'s available screen list, the user receives notification that search is complete and may select to project the mobile phone's screen onto the smart TV. Upon receiving this instruction, the mobile phone sends a TDLS connection establishment request for the smart TV.

First apparatus 110 receives (335) a connection request from first terminal device 130 (e.g., TDLS connection establishment request). First apparatus 110 then forwards the connection request to second apparatus 120 associated with second terminal device 140.

In some embodiments, first apparatus 110 confirms that the target terminal device in the connection request is not associated with it based on the target address (i.e., second terminal device 140's address). Based on stored records (terminal-device-apparatus/BSSID associations), first apparatus 110 determines that second apparatus 120 and second BSSID map to second terminal device 140's address. Thus, first apparatus 110 forwards the connection request to coordinating second apparatus 120, where receiving address is second apparatus 120's address and target address is second terminal device 140's address.

In some embodiments, first apparatus 110 directly forwards the connection request to second terminal device 140 via second apparatus 120 based on pre-stored second address and associations for rapid response and resource savings.

Second apparatus 120 receives (340) the connection request from first apparatus 110 and forwards it to second terminal device 140. Second terminal device 140 receives (345) the connection request from second apparatus 120 and sends a connection response for the connection request (e.g., TDLS setup response). Second apparatus 120 receives (350) the connection response from second terminal device 140 and forwards it to first apparatus 110.

In some embodiments, second apparatus 120 directly forwards the connection response to first terminal device 130 via first apparatus 110 based on pre-stored first address and associations for rapid response and resource savings.

First apparatus 110 receives (355) the connection response from second apparatus 120 and forwards (360) it to first terminal device 130. After receiving the connection response from second terminal device 140, first terminal device 130 determines to establish a wireless connection with second terminal device 140. First terminal device 130 sends an acknowledgment message for the connection response via first apparatus 110 and second apparatus 120 to second terminal device 140 (e.g., TDLS setup acknowledgment).

First apparatus 110 receives (365) the acknowledgment message from first terminal device 130 and forwards it to second apparatus 120. Second apparatus 120 receives (370) the acknowledgment message from first apparatus 110 and forwards (375) it to second terminal device 140.

Second terminal device 140 establishes (380) a direct wireless connection with first terminal device 130 based on the acknowledgment message. After exchanging necessary management frames, first terminal device 130 and second terminal device 140 establish TDLS connections and begin transmitting data directly through this connection. For example, after completing data transmission, mobile phone's screen content is displayed directly via smart TV.

In some embodiments, either first terminal device 130 or second terminal device 140 may terminate the TDLS connection. For example, mobile phone/smart TV may send a TDLS tear-down frame to disconnect from smart TV/mobile phone's TDLS connection.

In some embodiments, at least one of the connection request, connection response, and acknowledgment message comprises security information for the TDLS connection. The security information is based on at least part of first terminal device 130's first address (e.g., first BSSID stored in first address). In other words, terminal devices may perform security authentication for TDLS connections based on security information and first BSSID of first terminal device 130.

To enable secure communication over TDLS direct links, TDLS initiating STA (first terminal device 130) and TDLS peer STA (second terminal device 140) must establish robust security network associations (RSNA) with their associated access points. In this embodiment, two STAs are associated with different access points, and the two different access points (first apparatus 110 and second apparatus 120) have established a trusted coordination framework for data communication. Specifically, key calculation for secure communication may use the following formula: $Output = Hash \left(min\left(SNonce, ANonce\right)\left‖max\left(SNonce, ANonce\right)\right.\right) ,$ $MACS = min \left(MACI, MACR\right) \left‖max\left(MACI, MACR\right)\right. \left‖BSSID,\right.$ $TPK = KDF \left(Input, "TDLS PMK", MACS\right) ,$ where ANonce is a random number generated by first terminal device 130, SNonce is a random number generated by second terminal device 140, min(,) denotes the smaller value of variables, max(,) denotes the larger value, Hash generates hash values, MACI is MAC address of first terminal device 130, MACR is MAC address of second terminal device 140, BSSID is basic service set identifier (MAC address associated with first apparatus 110), and TPK is temporary key.

The TPK obtained from the above calculation enables secure authentication between terminal devices across access points. According to IEEE 802.11 protocol specifications, TPK handshake consists of three messages. Each message contains several elements comprised in TDLS setup request (connection request), TDLS setup response (connection response), and TDLS setup acknowledgment (acknowledgment message). Thus, the above TDLS connection procedure comprises TPK handshake to ensure secure links between two STAs.

In some embodiments, portions of first address of first terminal device 130 and second address of second terminal device 140 may be entirely different. Alternatively, in some embodiments, certain portions of first address match corresponding portions of second address. For example, in environment 100 with multiple terminal devices, each has specific fields (e.g., high-order MAC addresses). High-order MAC addresses are the highest N bits of a MAC address where N is a predefined positive integer. If this specific field matches, it indicates terminal devices belong to the same group; if different, they do not belong to the same group. For instance, terminal devices in the same household have identical specific fields, while those in different households have different fields. In embodiments where terminal devices in each group share identical specific fields, first address and second address may match in this field.

Second terminal device 140 may determine whether first address's specific field matches second address's corresponding field upon receiving the device discovery request from first terminal device 130. If matching, it sends a discovery response to establish wireless connection; otherwise, it does not send a discovery response and avoids establishing connections. This ensures that only terminal devices within the same group (e.g., household) establish point-to-point direct wireless connections, preventing intrusion from external groups. Thus, cross-access-point connections can be restricted to avoid connecting with other groups' terminal devices.

FIGs. 2-4 describe examples of establishing wireless connections (e.g., TDLS connections) between terminal devices associated with different BSSs via first apparatus 110 and second apparatus 120. It should be understood that terminal devices may establish direct wireless connections through two or more apparatuses/routing devices. Wireless connections may comprise TDLS connections or other appropriate wireless/P2P WiFi connections; embodiments of the present disclosure are not limited in this aspect.

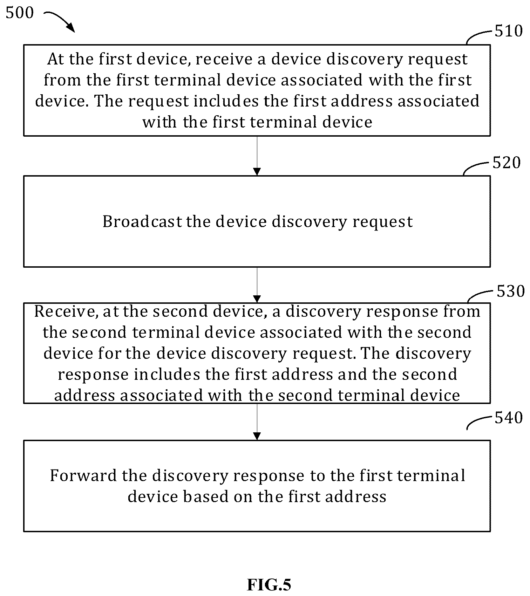

FIG. 5 illustrates a flowchart of a method implemented at first apparatus 110 according to some embodiments of the present disclosure. Process 500 may be implemented at first apparatus 110. Below, process 500 is described with reference to FIG. 1.

As shown in FIG. 5, at block 510, first apparatus 110 receives a device discovery request from first terminal device 130 associated with first apparatus 110, wherein the device discovery request comprises a first address associated with first terminal device 130.

At block 520, first apparatus 110 broadcasts the device discovery request.

At block 530, first apparatus 110 receives, from second apparatus 120, a discovery response from second terminal device 140 associated with second apparatus 120 for the device discovery request, wherein the discovery response comprises the first address and a second address associated with second terminal device 140.

At block 540, first apparatus 110 forwards the discovery response to first terminal device 130 based on the first address.

In this embodiment, first apparatus 110 can broadcast wireless connection requests, interact with other wireless access points (e.g., second apparatus 120), and enable communication between itself-associated terminal devices (first terminal device 130) and non-associated terminal devices (second terminal device 140).

In some embodiments, the first address comprises: MAC address of first terminal device 130; BSSID of first apparatus 110; and first terminal device 130 is associated with first BSSID.

In some embodiments, the second address comprises: MAC address of second terminal device 140; BSSID of second apparatus 120; and second terminal device 140 is associated with second BSSID.

In some embodiments, process 500 further comprises: receiving a connection request from first terminal device 130 for establishing TDLS connection with second terminal device 140; and forwarding the connection request to second apparatus 120 associated with second terminal device 140.

In some embodiments, process 500 further comprises: receiving a connection response from second apparatus 120 for second terminal device 140's connection request; forwarding the connection response to first terminal device 130; receiving an acknowledgment message from first terminal device 130 for the connection response; and forwarding the acknowledgment message to second apparatus 120.

In some embodiments, process 500 further comprises: storing the second address and association between second apparatus 120 and second terminal device 140 upon receiving discovery response from second apparatus 120; and forwarding the connection request to second apparatus 120 based on second address and associations.

In some embodiments, at least one of the connection request, connection response, and acknowledgment message comprises security information for TDLS connection, wherein the security information is based on at least part of first terminal device 130's first address.

In some embodiments, first apparatus 110 is a first routing device, second apparatus 120 is a second routing device, and communication between them is via wired or wireless connection.

In some embodiments, portions of first address of first terminal device 130 and second address of second terminal device 140 are identical or different.

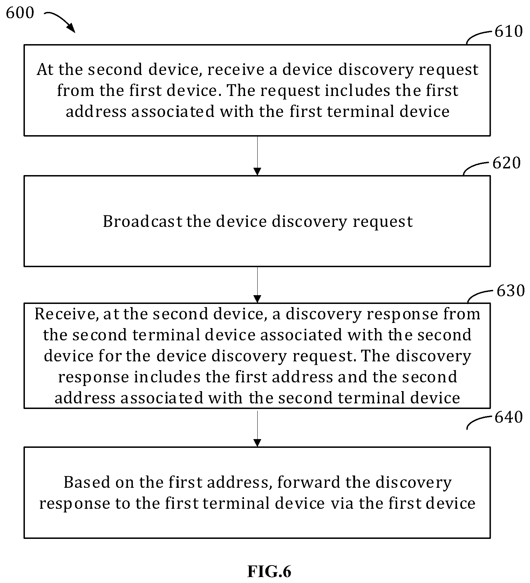

FIG. 6 illustrates a flowchart of a method implemented at second apparatus 120 according to some embodiments of the present disclosure. Process 600 may be implemented at second apparatus 120. Below, process 600 is described with reference to FIG. 1.

As shown in FIG. 6, at block 610, second apparatus 120 receives a device discovery request from first apparatus 110, wherein the device discovery request comprises a first address associated with first terminal device 130.

At block 620, second apparatus 120 broadcasts the device discovery request.

At block 630, second apparatus 120 receives, from second terminal device 140 associated with second apparatus 120, a discovery response for the device discovery request, wherein the discovery response comprises the first address and a second address associated with second terminal device 140.

At block 640, second apparatus 120 forwards the discovery response to first terminal device 130 via first apparatus 110 based on the first address.

In this embodiment, second apparatus 120 receives broadcasted wireless connection requests, stores relevant address information, interacts with other wireless access points (e.g., first apparatus 110), and enables communication between non-associated terminal devices (first terminal device 130) and associated terminal devices (second terminal device 140).

In some embodiments, the first address comprises: BSSID of first apparatus 110; first terminal device 130 is associated with BSSID; MAC address of first terminal device 130.

In some embodiments, the second address comprises: BSSID of second apparatus 120; second terminal device 140 is associated with second BSSID; MAC address of second terminal device 140.

In some embodiments, process 600 further comprises: determining whether first terminal device 130 is associated with second apparatus 120 based on the first address; and forwarding the discovery response to first terminal device 130 via first apparatus 110 based on the first address upon determining that first terminal device 130 is associated with first apparatus 110 but not with second apparatus 120.

In some embodiments, process 600 further comprises: receiving a connection request from first terminal device 130 for establishing TDLS connection with second terminal device 140 via first apparatus 110; and forwarding the connection request to second terminal device 140.

In some embodiments, process 600 further comprises: receiving a connection response from second terminal device 140 for the connection request; forwarding the connection response to first terminal device 130 via first apparatus 110; receiving an acknowledgment message from first terminal device 130 for the connection response via first apparatus 110; and forwarding the acknowledgment message to second apparatus 120.

In some embodiments, process 600 further comprises: storing the first address and association between first apparatus 110 and first terminal device 130 upon receiving device discovery request from first apparatus 110; and forwarding at least one of discovery response and connection response to first terminal device 130 via first apparatus 110 based on first address and associations.

In some embodiments, at least one of the connection request, connection response, and acknowledgment message comprises security information for TDLS connection, wherein the security information is based on at least part of first terminal device 130's first address.

In some embodiments, first apparatus 110 is a first routing device, second apparatus 120 is a second routing device, and communication between them is via wired or wireless connection.

In some embodiments, portions of first address of first terminal device 130 and second address of second terminal device 140 are identical or different.

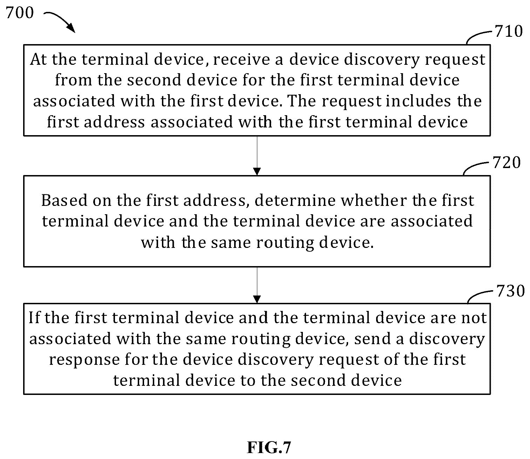

FIG. 7 illustrates a flowchart of a method implemented at second terminal device 140 according to some embodiments of the present disclosure. Process 700 may be implemented at second terminal device 140. Below, process 700 is described with reference to FIG. 1.

At block 710, second terminal device 140 receives a device discovery request from second apparatus 120 for first terminal device 130 associated with first apparatus 110, wherein the device discovery request comprises a first address associated with first terminal device 130.

At block 720, second terminal device 140 determines whether first terminal device 130 and the terminal device are associated with the same routing device based on the first address.

At block 730, second terminal device 140 sends a discovery response to second apparatus 120 for the device discovery request of first terminal device 130 in response to determining that first terminal device 130 and the terminal device are not associated with the same routing device.

In this embodiment, second terminal device 140 receives requests and information from terminal devices associated with different access points and responds accordingly, enabling direct wireless connections between terminal devices associated with different access points.

In some embodiments, the first address comprises a BSSID; determining whether first terminal device 130 and the terminal device are associated with the same routing device is based on comparison between first BSSID and second BSSID associated with the terminal device.

In some embodiments, process 700 further comprises: receiving a connection request from first terminal device 130 for establishing TDLS connection with the terminal device via second apparatus 120; sending a connection response for the connection request; and receiving an acknowledgment message for the connection response from second apparatus 120.

In some embodiments, at least one of the connection request, connection response, and acknowledgment message comprises security information for TDLS connection, and process 700 further comprises: performing security authentication for TDLS connections based on security information and first BSSID of first terminal device 130.

In exemplary embodiments, a communication apparatus may comprise components to execute steps of process 500, process 600, or process 700. These components may be implemented in any suitable manner (e.g., as circuitry or software modules).

In some exemplary embodiments, a communication apparatus comprises: a receiver configured to receive a device discovery request from first terminal device 130 associated with first apparatus 110, wherein the device discovery request comprises a first address associated with first terminal device 130; a transmitter configured to broadcast the device discovery request; a receiver configured to receive, from second apparatus 120, a discovery response from second terminal device 140 associated with second apparatus 120 for the device discovery request, wherein the discovery response comprises the first address and a second address associated with second terminal device 140; and a processor configured to forward the discovery response to first terminal device 130 based on the first address.

In some exemplary embodiments, a communication apparatus comprises: a receiver configured to receive a device discovery request from first apparatus 110, wherein the device discovery request comprises a first address associated with first terminal device 130; a transmitter configured to broadcast the device discovery request; a receiver configured to receive, from second terminal device 140 associated with second apparatus 120, a discovery response for the device discovery request, wherein the discovery response comprises the first address and a second address associated with second terminal device 140; and a processor configured to forward the discovery response to first terminal device 130 via first apparatus 110 based on the first address.

In some exemplary embodiments, a communication apparatus comprises: a receiver configured to receive a device discovery request from second apparatus 120 for first terminal device 130 associated with first apparatus 110, wherein the device discovery request comprises a first address associated with first terminal device 130; a processor configured to determine whether first terminal device 130 and the communication apparatus are associated with the same routing device based on the first address; and a transmitter configured to send a discovery response to second apparatus 120 for the device discovery request of first terminal device 130 in response to determining that first terminal device 130 and the communication apparatus are not associated with the same routing device.

In some exemplary embodiments, the communication apparatus may further comprise components to execute other steps of process 500, process 600, or process 700. In some exemplary embodiments, components may comprise at least one processor and at least one memory coupled to the processor, storing instructions that cause the apparatus to perform operations when executed with the processor.

The above descriptions with reference to FIGs. 1-7 detail examples of first apparatus 110 and other apparatuses. In some exemplary embodiments, first apparatus 110 may communicate with other apparatuses in a communication system. The communication system may comprise any other suitable components or apparatuses.

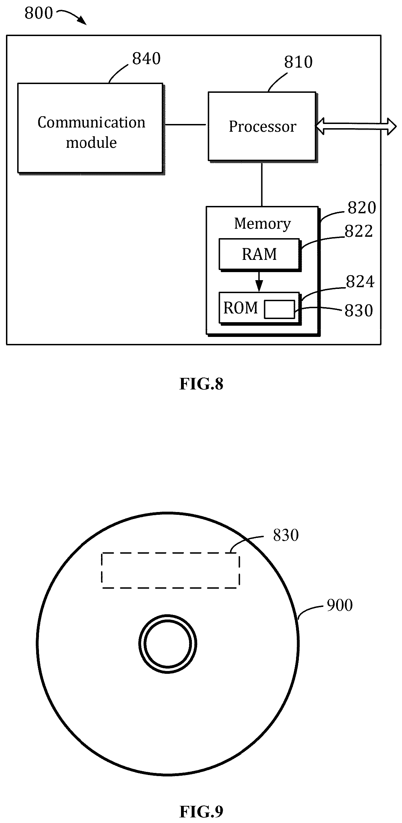

FIG. 8 is a simplified block diagram of an apparatus 800 suitable for implementing embodiments of the present disclosure. As shown in FIG. 8, apparatus 800 comprises one or more processing units 810 coupled to one or more memories 820 and communication module 840.

Communication module 840 enables bidirectional communication. In some exemplary embodiments, communication module 840 may comprise at least one antenna for communication. In some embodiments, communication module 840 may have one or more communication interfaces representing any interface required for communicating with other network elements.

Processing unit 810 may be suitable for local technical networks and comprises but is not limited to general-purpose computers, specialized computers, microcontrollers, digital signal controllers (DSPs), multi-core controller architectures based on controllers. Apparatus 800 may have multiple processors, such as ASIC chips synchronized with the main processor's clock.

Memory 820 may comprise one or more non-volatile memories and one or more volatile memories. Examples of non-volatile memories comprise but are not limited to ROM 824, EPROM, flash memory, hard disks, CDs, DVDs, and other magnetic/optical storage. Examples of volatile memories comprise but are not limited to RAM 822 and other volatile memories that do not persist during power-off.

Computer program 830 comprises executable instructions for processing unit 810. Computer program 830 may be stored in ROM 824. Processing unit 810 executes appropriate actions and processes by loading computer program 830 into RAM 822.

Embodiments of the present disclosure may be implemented via computer program 830, enabling apparatus 800 to perform any process discussed with reference to FIGs. 2-8. Embodiments of the present disclosure may also be implemented via hardware or combinations of software and hardware.

In some exemplary embodiments, computer program 830 is tangibly contained in a computer-readable medium within apparatus 800 (e.g., memory 820) or accessible by apparatus 800. Computer program 830 is loaded from the computer-readable medium to RAM 822 for execution. The computer-readable medium may comprise any tangible non-volatile storage, such as ROM, EPROM, flash memory, hard disks, CDs, DVDs, etc. FIG. 9 illustrates an example of a CD/DVD-formatted computer-readable medium 900 according to some embodiments of the present disclosure. Computer program 830 is stored on computer-readable medium 900.

Generally, various embodiments of the present disclosure may be implemented via hardware, specialized circuits, software, logic, or any combination thereof. Some aspects may be implemented in hardware while others may be implemented as firmware or software executed by controllers, microprocessors, or other computing devices. Although aspects of exemplary embodiments are shown and described as block diagrams, flowcharts, or other graphical representations, it should be understood that described blocks, apparatuses, systems, techniques, or methods may be implemented as non-limiting examples in hardware, software, firmware, specialized circuits/logic, general-purpose hardware/controllers/other computing devices, or combinations thereof.

The present disclosure also provides at least one computer program product tangibly stored on a computer-readable storage medium. In some exemplary embodiments, the computer-readable storage medium is non-transitory. The computer program product comprises executable instructions (e.g., in program modules) that execute on real/virtual processors of devices to perform processes described with reference to FIGs. 5-7. Generally, program modules comprise routines, programs, libraries, objects, classes, components, data structures, etc., performing specific tasks or implementing abstract data types. In various embodiments, program module functions may be combined or split as needed. Machine-executable instructions for program modules may execute locally or distributedly across devices. In distributed devices, program modules may reside in local and remote storage media.

Computer program code for implementing methods of the present disclosure may be written in one or more programming languages (e.g., C language). As examples, these codes may execute on appropriate operating systems like Linux. These codes may be provided to general-purpose computers, specialized computers, or other programmable data processing devices' processors, causing implemented functionality/operations as specified in flowcharts and/or block diagrams when executed by the computer or device. Codes may fully run on a computer, partially on a computer, as an independent software package, partially on a computer with partial remote execution, or fully on remote computers/servers.

In context of the present disclosure, computer program code or related data may be carried by any suitable carrier enabling devices/apparatuses/processors to perform described processes and operations. Carrier examples comprise signals, computer-readable media, etc. Signal examples comprise electrical, optical, radio, sound, or other propagation signals (e.g., carriers, infrared signals).

Computer-readable media may be any tangible medium containing or storing programs for instruction execution systems, devices, or equipment. Computer-readable media may be signal-based or storage-based. Examples comprise electronic, magnetic, optical, electromagnetic, infrared, or semiconductor systems/devices/equipment, or combinations thereof. Detailed examples of computer-readable storage media comprise electrical connections with wires, portable computer disks, hard drives, RAM, ROM, EPROM/flash memory, optical storage devices, magnetic storage devices, or combinations thereof.

Although operations of methods in the present disclosure are described in specific order in figures, this does not imply they must be executed in that order or all shown operations must be performed to achieve desired results. Instead, steps may change execution order; additional or alternative steps may be omitted, combined, or split as needed. Additionally, features and functions of two or more apparatuses may be embodied in one apparatus; conversely, features/functions of one apparatus may be further divided across multiple apparatuses.

Although the present disclosure has been described with reference to specific embodiments, it should be understood that the present disclosure is not limited to disclosed specific embodiments. The present disclosure aims to cover all modifications and equivalent arrangements within the spirit and scope of appended claims.

## Claims

1. A first apparatus (110) for wireless connection, comprising:
at least one processor; and
at least one memory storing instructions that, when executed by at least one processor, cause the first apparatus (110) at least to:
receive a device discovery request from a first terminal device (130) associated with the first apparatus, wherein the device discovery request comprises a first address associated with the first terminal device;
broadcast the device discovery request;
receive, from a second apparatus (120), a discovery response from a second terminal device (140) associated with the second apparatus for the device discovery request, wherein the discovery response comprises the first address and a second address associated with the second terminal device; and
forward the discovery response to the first terminal device (130) based on the first address.

2. The first apparatus (110) of claim 1, wherein the first address comprises:a MAC address of the first terminal device; a first Basic Service Set Identifier,BSSID,of the first apparatus, wherein the first terminal device is associated with the first BSSID; wherein the second address comprises:a MAC address of the second terminal device; and a second BSSID of the second apparatus, wherein the second terminal device is associated with the second BSSID.

3. The first apparatus (110) of any one of claims 1-2, wherein the instructions, when executed by the at least one processor, further cause the first apparatus (110) to:
receive a connection request from the first terminal device (130) for establishing a Tunneled Direct Link Setup,TDLS, connection with the second terminal device;
forward the connection request to the second apparatus (120) associated with the second terminal device;
Receive, from the second apparatus, a connection response for the connection request;
forward the connection response to the first terminal device;
receive an acknowledgment message from the first terminal device for the connection response; and
forward the acknowledgment message to the second apparatus.

4. The first apparatus (110) of claim 3, wherein the instructions, when executed by at least one processor, further cause the first apparatus (110) to:
in response to receiving the discovery response from the second apparatus (120), store the second address and an association between the second apparatus and the second terminal device; and
forward the connection request to the second apparatus based on the second address and the association.

5. The first apparatus (110) of any one of claims 1-4, wherein at least one of the connection request, the connection response, and the acknowledgment message comprises security information for the TDLS connection, wherein the security information is based on at least a portion of the first address of the first terminal device(130); wherein the first apparatus is a first routing device, the second apparatus (120) is a second routing device, and communication between the first routing device and the second routing device is via at least one of wired connection or wireless connection.

6. A second apparatus (120) for wireless connection, comprising:
at least one processor; and
at least one memory storing instructions that, when executed by at least one processor, cause the second apparatus (120) at least to:
receive a device discovery request from a first apparatus (110), wherein the device discovery request comprises a first address associated with a first terminal device (130);
broadcast the device discovery request;
receive, from a second terminal device (140) associated with the second apparatus (120), a discovery response for the device discovery request, wherein the discovery response comprises the first address and a second address associated with the second terminal device; and
forward the discovery response to the first terminal device (130) via the first apparatus (110) based on the first address.

7. The second apparatus (120) of claim 6, wherein the first address comprises:a first Basic Service Set Identifier, BSSID, of the first apparatus (110), wherein the first terminal device (130) is associated with the BSSID; a MAC address of the first terminal device; wherein the second address comprises:a second BSSID of the second apparatus (120), wherein the second terminal device (140) is associated with the second BSSID; and a MAC address of the second terminal device.

8. The second apparatus (120) of claim 6, wherein the instructions, when executed by at least one processor, further cause the second apparatus to:
determine whether the first terminal device (130) is associated with the second apparatus based on the first address; and
forward the discovery response to the first terminal device via the first apparatus (110) based on the first address upon determining that the first terminal device is associated with the first apparatus but not with the second apparatus.

9. The second apparatus (120) of any one of claims 6-8, wherein the instructions, when executed by the at least one processor, further cause the second apparatus to:
receive a connection request from the first terminal device (130) for establishing a Tunneled Direct Link Setup,TDLS, connection with the second terminal device (140) via the first apparatus (110);
forward the connection request to the second terminal device.
receive a connection response from the second terminal device for the connection request;
forward the connection response to the first terminal device (130) via the first apparatus (110);
receive an acknowledgment message from the first terminal device for the connection response via the first apparatus (110); and
forward the acknowledgment message to the second terminal device.

10. The second apparatus (120) of claim 9, wherein the instructions, when executed by at least one processor, further cause the second apparatus to:
in response to receiving the device discovery request from the first apparatus (110), store the first address and an association between the first apparatus and the first terminal device (130); and
forward at least one of the discovery response and the connection response to the first terminal device via the first apparatus based on the first address and the association; wherein at least one of the connection request, the connection response, and the acknowledgment message comprises security information for the TDLS connection, wherein the security information is based on at least a portion of the first address of the first terminal device; wherein the first apparatus (110) is a first routing device, the second apparatus (120) is a second routing device, and communication between the first routing device and the second routing device is via at least one of wired connection or wireless connection.

11. A terminal device (140), comprising:
at least one processor; and
at least one memory storing instruction that, when executed by at least one processor, cause the terminal device (140) at least to:
receive a device discovery request from a second apparatus (120) for a first terminal device (130) associated with a first apparatus (110), wherein the device discovery request comprises a first address associated with the first terminal device;
determine whether the first terminal device and the terminal device are associated with the same routing device based on the first address; and
send a discovery response to the second apparatus for the device discovery request of the first terminal device in response to determining that the first terminal device and the terminal device are not associated with the same routing device.

12. The terminal device (140) of claim 11, wherein the first address comprises a first Basic Service Set Identifier, BSSID, and determining whether the first terminal device and the terminal device are associated with the same routing device is based on a comparison between the first BSSID and a second BSSID associated with the terminal device.

13. The terminal device (140) of claim 11, wherein the instructions, when executed by the at least one processor, further cause the terminal device at least to:
receive a connection request from the first terminal device (130) for establishing a Tunneled Direct Link Setup,TDLS, connection with the terminal device via the second apparatus (120);
send a connection response for the connection request; and
receive an acknowledgment message for the connection response from the second apparatus (120);
wherein at least one of the connection request, the connection response, and the acknowledgment message comprises security information for the TDLS connection, and
wherein the instructions, when executed by the at least one processor, further cause the terminal device to:perform security authentication for the TDLS connection based on the security information and a first BSSID of the first terminal device.

14. A method for wireless connection, comprising:
receiving, at a first apparatus (110), a device discovery request from a first terminal device (130) associated with the first apparatus (110), wherein the device discovery request comprises a first address associated with the first terminal device;
broadcasting the device discovery request;
receiving, from a second apparatus (120), a discovery response from a second terminal device (140) associated with the second apparatus for the device discovery request, wherein the discovery response comprises the first address and a second address associated with the second terminal device; and
forwarding the discovery response to the first terminal device (130) based on the first address.

15. A method for wireless connection, comprising:
receiving, at a second apparatus (120), a device discovery request from a first apparatus (110), wherein the device discovery request comprises a first address associated with a first terminal device (130);
broadcasting the device discovery request;
receiving, from a second terminal device (140) associated with the second apparatus, a discovery response for the device discovery request, wherein the discovery response comprises the first address and a second address associated with the second terminal device; and
forwarding the discovery response to the first terminal device via the first apparatus based on the first address.

16. A method for wireless connection, comprising:
receiving, at a terminal device (140), a device discovery request from a second apparatus (120) for a first terminal device associated with a first apparatus (110), wherein the device discovery request comprises a first address associated with the first terminal device (130);
determining whether the first terminal device and the terminal device are associated with the same routing device based on the first address; and
sending a discovery response to the second apparatus for the device discovery request of the first terminal device in response to determining that the first terminal device and the terminal device are not associated with the same routing device.

17. A non-transitory computer-readable medium storing instructions that, when executed by a device, cause the device to perform at least one of the methods according to claims 14-16.
